# EUROPÄISCHE PATENTANMELDUNG

(11) **EP 0 670 253 A1**
(43) Veröffentlichungstag der Anmeldung: **06.09.1995**
(21) Anmeldenummer: 95101870.4
(22) Anmeldetag: 11.02.1995
(51) Int. Cl.: B60S 5/04, B05B 1/00

(54) **Einrichtung zum Ausbringen von Druckluft**

(30) Priorität: 04.03.1994 DE 9403523 U
(71) Anmelder: Firma Schneider Druckluft GmbH, D-72770 Reutlingen (DE)
(72) Erfinder: Schneider, Wilfried, D-72793 Pfullingen (DE)
(74) Vertreter: Möbus, Rudolf, Dipl.-Ing.

(57) **Zusammenfassung**

Eine Einrichtung zum Ausbringen von Druckluft, die über eine flexible Druckluftleitung mit einem Druckluftbehälter verbunden ist, in Form einer Pistole (10), die einen Abzugshebel (12) zur Auslösung des Druckluftaustritts durch ein am vorderen Ende der Pistole (10) angeordnetes Druckluftauslaßventil (13) aufweist.

## Beschreibung

Die Erfindung betrifft eine Einrichtung zum Ausbringen von Druckluft, die über eine flexible Druckluftleitung mit einem Druckluftbehälter verbunden ist.

Solche Einrichtungen sind insbesondere von Tankstellen in Form von auf Reifenventile aufsetzbaren und festklemmbaren Druckluftauslaßventilen, die über eine Schlauchleitung mit einem tragbaren Druckluftbehälter verbunden sind, bekannt. Bei den bekannten Geräten wird der Druckluftauslaß jedoch über einen Knopf am Druckluftbehälter gesteuert, so daß der Einsatz der bekannten Einrichtungen stets eine Zweihandbedienung erfordert. Auch die Kontrollgeräte, wie Manometer, sind am Druckluftbehälter angeordnet, was den Gebrauch zusätzlich unkomfortabel macht.

Der Erfindung liegt daher die Aufgabe zugrunde, eine Einrichtung zum Ausbringen von Druckluft zu schaffen, die eine Einhandbedienung erlaubt.

Die Erfindung wird mit einer Einrichtung der eingangs genannten Art erfindungsgemäß dadurch gelöst, daß sie in Form einer Pistole ausgebildet ist, die einen Abzugshebel zur Auslösung des Druckluftaustritts durch ein am vorderen Ende der Pistole angeordnetes Druckluftauslaßventil aufweist. Mit der erfindungsgemäßen Einrichtung kann also unter Zuhilfenahme nur einer Hand die Pistole beispielsweise auf ein Reifenventil aufgesetzt und durch Bedienung des Abzugshebels der Füllvorgang des Reifens eingeleitet werden. Hierzu kann das Druckluftauslaßventil zweckmäßigerweise als Steckerelement ausgebildet sein, das einen direkten Anschluß der Einrichtung an das Reifenventil oder dergleichen erlaubt. Das Druckluftauslaßventil kann auch mit einem Kipphebel zur Fixierung an einem solchen Reifenventil während des Befüllens ausgestattet sein. Am Druckluftauslaßventil können außerdem weitere, als Ausblasdüsen oder Befüllstecker ausgebildete und mit einem in das Druckluftauslaßventil passenden Adapterstück versehene Vorsatzelemente einsetzbar sein. Auf diese Weise können mit der Einrichtung beispielsweise Fahrradreifen, Mountainbikereifen, Auto- und Motorradreifen, Rennradreifen oder auch Fußbälle und Schlauchboote befüllt sowie unterschiedliche Ausblasarbeiten durchgeführt werden. Dabei sind sämtliche dieser Arbeiten nach Montage der Vorsatzelemente ebenfalls einhändig ausführbar. Am Handgriff der Einrichtungen kann außerdem ein Anschlußnippel zum Anschluß der flexiblen Druckluftleitung mittels einer Schnellkupplung angeordnet sein. Weitere Vorteile ergeben sich, wenn der Druckluftbehälter in an sich bekannter Weise tragbar ausgeführt oder anderweitig transportfähig gestaltet ist, um einen flexiblen Einsatz der Einrichtung zu ermöglichen. Zur sicheren Aufbewahrung der Pistole kann sie mit einer Öse zum Aufhängen ausgestattet sein. Zweckmäßigerweise kann an der Pistole auch ein Manometer in einer gut ablesbaren Position angeordnet sein, das den Fülldruck der zu befüllenden Objekte anzeigt. Bei einer weiteren vorteilhaften Ausgestaltung kann an der Einrichtung auch ein Druckventil zum Entlüften von zu befüllenden Objekten vorgesehen sein, das ein Wiederablassen von Luft beispielsweise aus einem Reifen nach zu starker Befüllung erlaubt.

Nachfolgend wird ein bevorzugtes Ausführungsbeispiel einer erfindungsgemäßen Einrichtung anhand der Zeichnung näher erläutert.

Im einzelnen zeigen:
- Fig. 1: eine schematische Seitenansicht einer erfindungsgemäßen Einrichtung;
- Fig. 2: mehrere Vorsatzelemente für die Einrichtung nach Fig. 1.

Die pistolenartige Einrichtung 10 weist einen Handgriff 11 und einen vom Handgriff 11 mit dem Finger gut erreichbaren Abzugshebel 12 zur Auslösung des Druckluftaustritts auf. Die Druckluft wird dabei durch ein am vorderen Ende der Einrichtung 10 angeordnetes Druckluftauslaßventil 13 geleitet, das so geformt ist, daß es auf das Ventil eines Autoreifens aufsteckbar ist. Zur Fixierung des Auslaßventils 13 am Reifenventil ist ein Kipphebel 14 vorgesehen. Am unteren Ende des Handgriffs 11 weist die Einrichtung 10 einen Stecknippel 15 zum Anschluß eines zu einem Druckluftbehälter führenden Druckluftschlauches auf. Weitere Elemente der Pistole 10 sind ein auf der Oberseite in guter Sichtposition angeordnetes Manometer 16, mit dem der Befüllzustand von zu befüllenden Objekten überprüft werden kann. An der Seite ist ein Druckventil 17 angeordnet, mit dem ein zu befüllendes Objekt wieder entlüftet werden kann, falls zuviel Druckluft eingeführt worden sein sollte. In den Körper der Pistole 10 eingeformt ist außerdem eine Einhängöse 18, die ein Aufhängen der Einrichtung 10 beispielsweise an einem Druckluftbehälter ermöglicht.

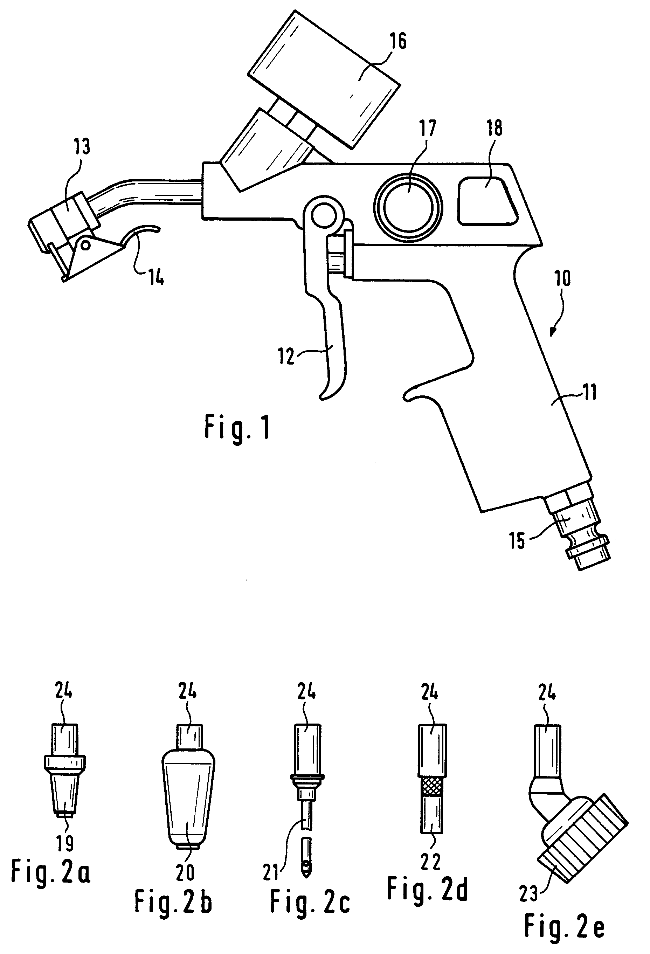

Die Fig. 2a bis 2e zeigen verschiedene in das Druckluftauslaßventil 13 einsetzbare und mit Hilfe des Kipphebels 14 fixierbare Vorsatzelemente, wobei Fig. 2a ein Vorsatzelement 19 zum Befüllen von Schlauchbooten, Fig. 2b eine Ausblasdüse 20, Fig. 2c ein Vorsatzelement 21 zum Befüllen von Fußbällen, Fig. 2d ein Vorsatzelement 22 zum Befüllen von Rennradreifen und Fig. 2e ein Vorsatzelement 23 zum Befüllen von gewöhnlichen Fahrradreifen zeigt. Sämtliche Vorsatzelemente 19 - 23 weisen auf ihrer Rückseite ein Adapterstück 24 auf, das in das Druckluftauslaßventil 13 der Pistole einsetzbar und mit Hilfe des Hebels 14 fixierbar ist. Durch einfaches Aufstecken der entsprechenden Vorsatzelemente kann somit die erfindungsgemäße Einrichtung den verschiedensten Anwendungszwecken angepaßt werden.

## Patentansprüche

1. Einrichtung zum Ausbringen von Druckluft, die über eine flexible Druckluftleitung mit einem Druckluftbehälter verbunden ist, dadurch gekennzeichnet, daß sie in Form einer Pistole (10) ausgebildet ist, die einen Abzugshebel (12) zur Auslösung des Druckluftaustritts durch ein am vorderen Ende der Pistole (10) angeordnetes Druckluftauslaßventil (13) aufweist.

2. Einrichtung nach Anspruch 1, dadurch gekennzeichnet, daß das Druckluftauslaßventil (13) als Steckerelement ausgebildet ist, das einen direkten Anschluß der Einrichtung an ein Ventil eines Autoreifens oder dergleichen erlaubt.

3. Einrichtung nach Anspruch 2, dadurch gekennzeichnet, daß das Druckluftauslaßventil (13) mit einem Kipphebel (14) zur Fixierung an einem Autoreifenventil oder dergleichen ausgestattet ist.

4. Einrichtung nach einem der Ansprüche 1 bis 3, dadurch gekennzeichnet, daß am Druckluftauslaßventil (13) weitere als Ausblasdüsen (20) oder Befüllstecker (19, 21, 22, 23) ausgebildete und mit einem in das Druckluftauslaßventil (13) passenden Adapterstück (24) versehene Vorsatzelemente (19 - 23) einsetzbar sind.

5. Einrichtung nach Anspruch 3 und Anspruch 4, dadurch gekennzeichnet, daß die Vorsatzelemente (19 - 23) mit Hilfe des Kipphebels (14) im Druckluftauslaßventil (13) fixierbar sind.

6. Einrichtung nach einem der Ansprüche 1 bis 5, dadurch gekennzeichnet, daß am Handgriff (11) der Pistole (10) ein Anschlußnippel (15) zum Anschluß einer flexiblen Druckluftleitung mittels einer Schnellkupplung angeordnet ist.

7. Einrichtung nach einem der Ansprüche 1 bis 6, dadurch gekennzeichnet, daß sie ein Manometer (16) in einer gut ablesbaren Position aufweist.

8. Einrichtung nach einem der Ansprüche 1 bis 7, dadurch gekennzeichnet, daß sie ein Druckventil (17) zum Entlüften von zu befüllenden Objekten aufweist.

9. Einrichtung nach einem der Ansprüche 1 bis 8, dadurch gekennzeichnet, daß sie mit einer Öse (18) zum Aufhängen der Einrichtung (10) ausgestattet ist.
